# EUROPEAN PATENT APPLICATION

(11) **EP 4 810 637 A1**
(43) Date of publication of application: **23.09.2026**
(21) Application number: 26150147.2
(22) Date of filing: 05.01.2026
(51) Int. Cl.: C22C 30/00, B32B 15/01

(54) **ALLOYS, BOND COATINGS, AND COMPONENTS INCLUDING SAME**

(30) Priority: 21.03.2025 US 202519087163
(71) Applicant: GE Vernova Technology GmbH, 5400 Baden (CH); The Regents of University of California, Oakland, CA 94607-5200 (US); ATI Properties LLC, Albany OR 97321 (US)
(72) Inventor: ENDSLEY, Melina Ann, Oakland, 94607-5200 (US); HOLGATE, Collin Scott, Oakland, 94607-5200 (US); RAO, Eddy Lizhen, Oakland, 94607-5200 (US); POLLOCK, Tresa M., Oakland, 94607-5200 (US); LEVI, Carlos G., Oakland, 94607-5200 (US); PHILIPS, Noah, Albany, 97321 (US); WORKU, Michael, Schenectady, 12345 (US)
(74) Representative: Openshaw & Co.

(57) **Abstract**

Alloys, bond coatings formed from the alloys, and components including the alloys are disclosed. The alloys can include between approximately 20 atomic percent and approximately 30 atomic percent titanium (Ti), between approximately 35 atomic percent and approximately 55 atomic percent aluminum (Al), and a balance of niobium (Nb). Additionally, or alternatively, the alloys can include between approximately 1 atomic percent and approximately 10 atomic percent molybdenum (Mo), between approximately 1 atomic percent and approximately 7 atomic percent chromium (Cr), between approximately 1 atomic percent and approximately 20 atomic percent silicon (Si) and/or between approximately 1 atomic percent and approximately 5 atomic percent hafnium (Hf).

## Description

### STATEMENT REGARDING FEDERALLY SPONSORED RESEARCH & DEVELOPMENT

The United States Government may have certain rights in this invention pursuant to Contract No. DE-AR0001420, awarded by United States Department of Energy.

### TECHNICAL FIELD

The disclosure relates generally to alloys, and more particularly, to alloys, bond coatings formed from alloys, and components including bond coatings formed from alloys.

### BACKGROUND

Typically, gas turbine systems utilized nickel (Ni) based superalloys to form components within gas turbines that are exposed to hot gases and/or are positioned within the hot gas path. For example, combustion liners, transition pieces, turbine nozzles, and turbine blades (also known as "turbine buckets"), are often formed from nickel (Ni) based superalloys because of the high melting temperature. However, components formed from nickel (Ni) based superalloys typically are exposed to high temperatures during operation of gas turbine systems and as a result are often heated very close to the melting temperature for nickel (Ni) based superalloys. Further the efficiencies of gas engines and gas turbine systems are projected with increased (e.g., hotter) turbine inlet temperatures, so long as the internal components of the systems can withstand with increased temperature.

Refractory multi-principal element alloys (RMPEAs) are a promising replacement for nickel (Ni) based superalloys because of RMPEAs' have equally or higher melting temperatures. However, RMPEAs have lower resistances to oxidation, and often require oxidation-resistant bond coatings to protect components formed from RMPEAs. Alumina (Al2O3)-forming bond coating alloys are typically used on components to improve oxidation-resistance. But at the temperatures of interest for RMPEA components used in hot gas path components (e.g., ~1400°C), conventional alumina-forming bond coating alloys provide insufficient oxidation protection and/or can experience melting during operation at the heightened temperatures. Moreover, conventional alumina-forming bond coating alloys are thermo-mechanically incompatible with RMPEAs, resulting in inadequate bonding (e.g., peeling) between substrates formed from RMPEAs and conventional alumina-forming bond coating alloys.

Accordingly, it would be desirable to create an alloy that can be used for bond coating components utilized in gas turbine that are capable of withstanding the heightened temperatures of the hot gases, while also improving oxidation-resistance for RMPEAs component, as well as reducing defects (e.g., cracking) in the bond coating, and improving bonding between the bond coating and the RMPEA substrate.

### BRIEF DESCRIPTION

A first aspect of the disclosure provides an alloy including between approximately 20 atomic percent and approximately 30 atomic percent titanium (Ti), between approximately 35 atomic percent and approximately 55 atomic percent aluminum (Al), and a balance of niobium (Nb).

A second aspect of the disclosure provides a bond coating composition including an alloy. The alloy of the bond coating composition includes an alloy including, between approximately 20 atomic percent and approximately 30 atomic percent titanium (Ti), and between approximately 35 atomic percent and approximately 55 atomic percent aluminum (Al). The alloy also includes at least one of between approximately 1 atomic percent and approximately 10 atomic percent molybdenum (Mo), between approximately 1 atomic percent and approximately 7 atomic percent chromium (Cr), between approximately 1 atomic percent and approximately 20 atomic percent silicon (Si), or between approximately 1 atomic percent and approximately 5 atomic percent hafnium (Hf). Additionally, the alloy includes a balance of niobium (Nb).

A third aspect of the disclosure provides a component including a substrate formed from a first material, and a bond coating deposited over the substrate. The bond coating is formed from an alloy including between approximately 20 atomic percent and approximately 30 atomic percent titanium (Ti), and between approximately 35 atomic percent and approximately 55 atomic percent aluminum (Al). The alloy forming the bond coating also includes at least one of between approximately 1 atomic percent and approximately 10 atomic percent molybdenum (Mo), between approximately 1 atomic percent and approximately 7 atomic percent chromium (Cr), between approximately 1 atomic percent and approximately 20 atomic percent silicon (Si), or between approximately 1 atomic percent and approximately 5 atomic percent hafnium (Hf). Additionally, the alloy forming the bond coating also includes a balance of niobium (Nb). The bond coating also includes an outer portion formed as aluminum oxide (Al2O3).

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 is a scanning electron micrograph of a microstructure of a bulk ingot of an alloy, after the alloy is exposed to oxidation environment for one (1) hour at 1400°C.
FIG. 2 is a scanning electron micrograph of the microstructure of the bulk ingot of the alloy shown in FIG. 1, after the alloy is exposed to oxidation environment for 24 hours at 1400°C.
FIG. 3 is a scanning electron micrograph of the microstructure of the bulk ingot of the alloy shown in FIG. 1, after the alloy is exposed to oxidation environment for 100 hours at 1400°C.
FIG. 4 is a scanning electron micrograph of a microstructure of a bulk ingot of an alloy, after the alloy is exposed to cyclic oxidation environment for 25, one (1) hour cycles raising to 1400°C.
FIG. 5 is a scanning electron micrograph of a microstructure of a bulk ingot of another non-limiting example of an alloy, after the alloy is exposed to oxidation environment for 24 hours at 1400°C.
FIG. 6 is a scanning electron micrograph of a microstructure of a bulk ingot of a further non-limiting example of an alloy, after the alloy is exposed to oxidation environment for 24 hours at 1400°C.
FIG. 7 is a scanning electron micrograph of a microstructure of a bulk ingot of a non-limiting example of an alloy, after the alloy is exposed to oxidation environment for 24 hours at 1400°C.
FIG. 8 is a scanning electron micrograph of a microstructure of a bulk ingot of an additional non-limiting example of an alloy, after the alloy is exposed to oxidation environment for 24 hours at 1400°C.
FIG. 9 is a scanning electron micrograph of a microstructure of a bulk ingot of a non-limiting example of an alloy, after the alloy is exposed to oxidation environment for 24 hours at 1400°C.
FIG. 10 is a schematic, cross-sectional view of a component including a bond coating formed from an alloy.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION

In order to clearly describe the subject matter of the current disclosure, it will become necessary to select certain terminology when referring to and describing relevant components or portions within the current disclosure. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

The embodiments described herein relate to alloys, bond coatings formed from alloys, and components including bond coatings formed from alloys. Refractory multi-principal element alloys (RMPEAs) are not utilized to form components within gas turbines, for example, because of RMPEAs low oxidation resistance. The alloys and bond coatings described herein include elemental compositions and/or atomic percentages that increase the melting temperature of the alloys, while also allowing for the formation of alumina-portions to increase oxidation resistance for components or substrates bond coated therewith. Moreover, the compositions of the alloys described herein also reduce defects (e.g., cracking) formed in the bond coating after undergoing oxidation processes and/or when exposed to high-temperature, hot gases within gas turbines. Additionally, the alloys described herein improve bonding between the bond coating and components or substrates formed from RMPEAs.

At least some benefits of the alloys and bond coatings discussed herein include: (a) forming alumina-portions within the alloy and/or bond coating to increase oxidation resistance for components or substrates bond coated with the alloy; (b) reducing defects, such as cracks and breaks, formed in the bond coating after undergoing oxidation processes and/or exposure to high-temperature; (c) improving bonds between the bond coating and components or substrates formed from RMPEAs; (d) reducing peeling between distinct portions of the bond coating after undergoing oxidation processes and/or exposure to high-temperature; and (e) reducing stresses imparted on the alloys and bond coatings undergoing oxidation processes and/or exposure to high-temperature.

### FIRST ALLOY COMPOSITION - Ti, Al, & Nb

The exemplary embodiments described herein include an alloy composition. The alloy composition, as discussed herein, is compositionally made up of and/or includes a predetermined atomic percentage and/or amount of titanium (Ti), aluminum (Al), and niobium (Nb). As discussed herein the "atomic percentage," "atomic percent," and/or "atomic amount" refers to the percentage of a specific element's atoms relative to the total number of atoms in the alloy, and/or expresses the elemental composition of the alloy in terms of the number of atoms rather than the mass of each element included in the alloy composition.

In an exemplary embodiment, the alloy includes between approximately 20 atomic percent and approximately 30 atomic percent titanium (Ti), between approximately 35 atomic percent and approximately 55 atomic percent aluminum (Al), and a balance of niobium (Nb) (e.g., between approximately 15 atomic percent and approximately 45 atomic percent niobium (Nb)).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage. For example, in some embodiments, the alloy includes between approximately 15 atomic percent and approximately 45 atomic percent niobium (Nb). In some embodiments, the alloy includes between approximately 20 atomic percent and approximately 40 atomic percent niobium (Nb). In some embodiments, the alloy includes between approximately 25 atomic percent and approximately 35 atomic percent niobium (Nb). In some embodiments, the alloy includes between approximately 28 atomic percent and approximately 32 atomic percent niobium (Nb). In some embodiments, the alloy includes at least approximately 35 atomic percent niobium (Nb), and at most approximately 55 atomic percent niobium (Nb).

### SECOND ALLOY COMPOSITION - Ti, Al, Mo, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### THIRD ALLOY COMPOSITION - Ti, Al, Cr, & Nb

The exemplary embodiments described herein include an alloy composition. The alloy composition, as discussed herein, is compositionally made up of and/or includes a predetermined atomic percentage and/or amount of titanium (Ti), aluminum (Al), chromium (Cr), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 7 atomic percent chromium (Cr), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### FOURTH ALLOY COMPOSITION - Ti, Al, Si, & Nb

The exemplary embodiments described herein include an alloy composition. The alloy composition, as discussed herein, is compositionally made up of and/or includes a predetermined atomic percentage and/or amount of titanium (Ti), aluminum (Al), silicon (Si), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 20 atomic percent silicon (Si), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### FIFTH ALLOY COMPOSITION - Ti, Al, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### SIXTH ALLOY COMPOSITION - Ti, Al, Mo, Cr, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), chromium (Cr), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), between approximately 1 atomic percent and approximately 7 atomic percent chromium (Cr), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### SEVENTH ALLOY COMPOSITION - Ti, Al, Mo, Si, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), silicon (Si), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), between approximately 1 atomic percent and approximately 20 atomic percent silicon (Si), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### EIGHTH ALLOY COMPOSITION - Ti, Al, Mo, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### NINTH ALLOY COMPOSITION - Ti, Al, Cr, Si, & Nb

The exemplary embodiments described herein include an alloy composition. The alloy composition, as discussed herein, is compositionally made up of and/or includes a predetermined atomic percentage and/or amount of titanium (Ti), aluminum (Al), chromium (Cr), silicon (Si), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 7 atomic percent chromium (Cr), between approximately 1 atomic percent and approximately 20 atomic percent silicon (Si), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### TENTH ALLOY COMPOSITION - Ti, Al, Cr, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), chromium (Cr), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 7 atomic percent chromium (Cr), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### ELEVENTH ALLOY COMPOSITION - Ti, Al, Si, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), silicon (Si), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 20 atomic percent silicon (Si), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### TWELFTH ALLOY COMPOSITION - Ti, Al, Mo, Cr, Si, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), chromium (Cr), silicon (Si), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), between approximately 1 atomic percent and approximately 7 atomic percent chromium (Cr), between approximately 1 atomic percent and approximately 20 atomic percent silicon (Si), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### THIRTEENTH ALLOY COMPOSITION - Ti, Al, Mo, Cr, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), chromium (Cr), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), between approximately 1 atomic percent and approximately 7 atomic percent chromium (Cr), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### FOURTEENTH ALLOY COMPOSITION - Ti, Al, Mo, Si, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), silicon (Si), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), between approximately 1 atomic percent and approximately 20 atomic percent silicon (Si), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### FIFTEENTH ALLOY COMPOSITION - Ti, Al, Cr, Si, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), chromium (Cr), silicon (Si), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 7 atomic percent chromium (Cr), between approximately 1 atomic percent and approximately 20 atomic percent silicon (Si), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

### SIXTEENTH ALLOY COMPOSITION - Ti, Al, Mo, Cr, Si, Hf, & Nb

The exemplary embodiments described herein include an alloy composition. The alloy composition, as discussed herein, is compositionally made up of and/or includes a predetermined atomic percentage and/or amount of titanium (Ti), aluminum (Al), molybdenum (Mo), chromium (Cr), silicon (Si), hafnium (Hf), and niobium (Nb). In an exemplary embodiment, the alloy includes between approximately 20 atomic percent and approximately 30 atomic percent titanium (Ti), between approximately 35 atomic percent and approximately 55 atomic percent aluminum (Al), between approximately 1 atomic percent and approximately 10 atomic percent molybdenum (Mo), between approximately 1 atomic percent and approximately 7 atomic percent chromium (Cr), between approximately 1 atomic percent and approximately 20 atomic percent silicon (Si), between approximately 1 atomic percent and approximately 5 atomic percent hafnium (Hf), and a balance of niobium (Nb).

In some embodiments, the alloy includes any suitable amount of titanium (Ti) that facilitates the composition described herein. In some embodiments, the alloy includes between approximately 20 atomic percent and approximately 30 atomic percent titanium (Ti). In some embodiments, the alloy includes between approximately 23 atomic percent and approximately 27 atomic percent titanium (Ti). In some embodiments, the alloy includes between approximately 24 atomic percent and approximately 26 atomic percent titanium (Ti). In some embodiments, the alloy includes between approximately 25 atomic percent and approximately 30 atomic percent titanium (Ti). In some embodiments, the alloy includes between approximately 20 atomic percent and approximately 26 atomic percent titanium (Ti). In some embodiments, the alloy includes between approximately 21 atomic percent and approximately 25 atomic percent titanium (Ti).

In some embodiments, the alloy includes at least approximately 20 atomic percent titanium (Ti), at least approximately 21 atomic percent titanium (Ti), at least approximately 22 atomic percent titanium (Ti), at least approximately 23 atomic percent titanium (Ti), at least approximately 24 atomic percent titanium (Ti), at least approximately 25 atomic percent titanium (Ti), at least approximately 26 atomic percent titanium (Ti), at least approximately 27 atomic percent titanium (Ti), at least approximately 28 atomic percent titanium (Ti), or at least approximately 29 atomic percent titanium (Ti). In some embodiments, the alloy includes at most approximately 21 atomic percent titanium (Ti), at most approximately 22 atomic percent titanium (Ti), at most approximately 23 atomic percent titanium (Ti), at most approximately 24 atomic percent titanium (Ti), at most approximately 25 atomic percent titanium (Ti), at most approximately 26 atomic percent titanium (Ti), at most approximately 27 atomic percent titanium (Ti), at most approximately 28 atomic percent titanium (Ti), at most approximately 29 atomic percent titanium (Ti), or at most approximately 30 atomic percent titanium (Ti).

In some embodiments, the alloy includes any suitable amount of aluminum (Al) that facilitates the composition described herein. In some embodiments, the alloy includes between approximately 35 atomic percent and approximately 55 atomic percent aluminum (Al). In some embodiments, the alloy includes between approximately 40 atomic percent and approximately 50 atomic percent aluminum (Al). In some embodiments, the alloy includes between approximately 43 atomic percent and approximately 47 atomic percent aluminum (Al). In some embodiments, the alloy includes between approximately 35 atomic percent and approximately 46 atomic percent aluminum (Al). In some embodiments, the alloy includes between approximately 36 atomic percent and approximately 44 atomic percent aluminum (Al).

In some embodiments, the alloy includes at least approximately 35 atomic percent aluminum (Al), at least approximately 36 atomic percent aluminum (Al), at least approximately 37 atomic percent aluminum (Al), at least approximately 38 atomic percent aluminum (Al), at least approximately 39 atomic percent aluminum (Al), at least approximately 40 atomic percent aluminum (Al), at least approximately 41 atomic percent aluminum (Al), at least approximately 42 atomic percent aluminum (Al), at least approximately 43 atomic percent aluminum (Al), at least approximately 44 atomic percent aluminum (Al), at least approximately 45 atomic percent aluminum (Al), at least approximately 46 atomic percent aluminum (Al), at least approximately 47 atomic percent aluminum (Al), at least approximately 48 atomic percent aluminum (Al), at least approximately 49 atomic percent aluminum (Al), at least approximately 50 atomic percent aluminum (Al), at least approximately 51 atomic percent aluminum (Al), at least approximately 52 atomic percent aluminum (Al), at least approximately 53 atomic percent aluminum (Al), or at least approximately 54 atomic percent aluminum (Al). In some embodiments, the alloy includes at most approximately 36 atomic percent aluminum (Al), at most approximately 37 atomic percent aluminum (Al), at most approximately 38 atomic percent aluminum (Al), at most approximately 39 atomic percent aluminum (Al), at most approximately 40 atomic percent aluminum (Al), at most approximately 41 atomic percent aluminum (Al), at most approximately 42 atomic percent aluminum (Al), at most approximately 43 atomic percent aluminum (Al), at most approximately 44 atomic percent aluminum (Al), at most approximately 45 atomic percent aluminum (Al), at most approximately 46 atomic percent aluminum (Al), at most approximately 47 atomic percent aluminum (Al), at most approximately 48 atomic percent aluminum (Al), at most approximately 49 atomic percent aluminum (Al), at most approximately 50 atomic percent aluminum (Al), at most approximately 51 atomic percent aluminum (Al), at most approximately 52 atomic percent aluminum (Al), at most approximately 53 atomic percent aluminum (Al), at most approximately 54 atomic percent aluminum (Al), or at most approximately 55 atomic percent aluminum (Al).

In some embodiments, the alloy includes any suitable amount of molybdenum (Mo) that facilitates the composition described herein. In some embodiments, the alloy includes between approximately 1 atomic percent and approximately 10 atomic percent molybdenum (Mo). In some embodiments, the alloy includes between approximately 3 atomic percent and approximately 8 atomic percent molybdenum (Mo). In some embodiments, the alloy includes between approximately 4 atomic percent and approximately 6 atomic percent molybdenum (Mo). In some embodiments, the alloy includes between approximately 1 atomic percent and approximately 5 atomic percent molybdenum (Mo). In some embodiments, the alloy includes between approximately 1 atomic percent and approximately 4 atomic percent molybdenum (Mo).

In some embodiments, the alloy includes at least approximately 1 atomic percent molybdenum (Mo), at least approximately 2 atomic percent molybdenum (Mo), at least approximately 3 atomic percent molybdenum (Mo), at least approximately 4 atomic percent molybdenum (Mo), at least approximately 5 atomic percent molybdenum (Mo), at least approximately 6 atomic percent molybdenum (Mo), at least approximately 7 atomic percent molybdenum (Mo), at least approximately 8 atomic percent molybdenum (Mo), or at least approximately 9 atomic percent molybdenum (Mo). In some embodiments, the alloy includes at most approximately 2 atomic percent molybdenum (Mo), at most approximately 3 atomic percent molybdenum (Mo), at most approximately 4 atomic percent molybdenum (Mo), at most approximately 5 atomic percent molybdenum (Mo), at most approximately 6 atomic percent molybdenum (Mo), at most approximately 7 atomic percent molybdenum (Mo), at most approximately 8 atomic percent molybdenum (Mo), at most approximately 9 atomic percent molybdenum (Mo), or at most approximately 10 atomic percent molybdenum (Mo).

In some embodiments, the alloy includes any suitable amount of chromium (Cr) that facilitates the composition described herein. In some embodiments, the alloy includes between approximately 1 atomic percent and approximately 7 atomic percent chromium (Cr). In some embodiments, the alloy includes between approximately 2 atomic percent and approximately 6 atomic percent chromium (Cr). In some embodiments, the alloy includes between approximately 3 atomic percent and approximately 5 atomic percent chromium (Cr). In some embodiments, the alloy includes between approximately 1 atomic percent and approximately 5 atomic percent chromium (Cr). In some embodiments, the alloy includes between approximately 1 atomic percent and approximately 3 atomic percent chromium (Cr).

In some embodiments, the alloy includes at least approximately 1 atomic percent chromium (Cr), at least approximately 2 atomic percent chromium (Cr), at least approximately 3 atomic percent chromium (Cr), at least approximately 4 atomic percent chromium (Cr), at least approximately 5 atomic percent chromium (Cr), or at least approximately 6 atomic percent chromium (Cr). In some embodiments, the alloy includes at most approximately 2 atomic percent chromium (Cr), at most approximately 3 atomic percent chromium (Cr), at most approximately 4 atomic percent chromium (Cr), at most approximately 5 atomic percent chromium (Cr), at most approximately 6 atomic percent chromium (Cr), or at most approximately 7 atomic percent chromium (Cr).

In some embodiments, the alloy includes any suitable amount of silicon (Si) that facilitates the composition described herein. In some embodiments, the alloy includes between approximately 1 atomic percent and approximately 20 atomic percent silicon (Si). In some embodiments, the alloy includes between approximately 3 atomic percent and approximately 18 atomic percent silicon (Si). In some embodiments, the alloy includes between approximately 5 atomic percent and approximately 15 atomic percent silicon (Si). In some embodiments, the alloy includes between approximately 1 atomic percent and approximately 10 atomic percent silicon (Si). In some embodiments, the alloy includes between approximately 1 atomic percent and approximately 7 atomic percent silicon (Si). In some embodiments, the alloy includes between approximately 10 atomic percent and approximately 20 atomic percent silicon (Si). In some embodiments, the alloy includes between approximately 13 atomic percent and approximately 19 atomic percent silicon (Si).

In some embodiments, the alloy includes at least approximately 1 atomic percent silicon (Si), at least approximately 2 atomic percent silicon (Si), at least approximately 3 atomic percent silicon (Si), at least approximately 4 atomic percent silicon (Si), at least approximately 5 atomic percent silicon (Si), at least approximately 6 atomic percent silicon (Si), at least approximately 7 atomic percent silicon (Si), at least approximately 8 atomic percent silicon (Si), at least approximately 9 atomic percent silicon (Si), at least approximately 10 atomic percent silicon (Si), at least approximately 11 atomic percent silicon (Si), at least approximately 12 atomic percent silicon (Si), at least approximately 13 atomic percent silicon (Si), at least approximately 14 atomic percent silicon (Si), at least approximately 15 atomic percent silicon (Si), at least approximately 16 atomic percent silicon (Si), at least approximately 17 atomic percent silicon (Si), at least approximately 18 atomic percent silicon (Si), or at least approximately 19 atomic percent silicon (Si). In some embodiments, the alloy includes at most approximately 2 atomic percent silicon (Si), at most approximately 3 atomic percent silicon (Si), at most approximately 4 atomic percent silicon (Si), at most approximately 5 atomic percent silicon (Si), at most approximately 6 atomic percent silicon (Si), at most approximately 7 atomic percent silicon (Si), at most approximately 8 atomic percent silicon (Si), at most approximately 9 atomic percent silicon (Si), at most approximately 10 atomic percent silicon (Si), at most approximately 11 atomic percent silicon (Si), at most approximately 12 atomic percent silicon (Si), at most approximately 13 atomic percent silicon (Si), at most approximately 14 atomic percent silicon (Si), at most approximately 15 atomic percent silicon (Si), at most approximately 16 atomic percent silicon (Si), at most approximately 17 atomic percent silicon (Si), at most approximately 18 atomic percent silicon (Si), at most approximately 19 atomic percent silicon (Si), or at most approximately 20 atomic percent silicon (Si).

In some embodiments, the alloy includes any suitable amount of hafnium (Hf) that facilitates the composition described herein. In some embodiments, the alloy includes between approximately 1 atomic percent and approximately 5 atomic percent hafnium (Hf). In some embodiments, the alloy includes between approximately 2 atomic percent and approximately 4 atomic percent hafnium (Hf). In some embodiments, the alloy includes between approximately 1 atomic percent and approximately 4 atomic percent hafnium (Hf). In some embodiments, the alloy includes between approximately 1 atomic percent and approximately 3 atomic percent hafnium (Hf). In some embodiments, the alloy includes between approximately 2 atomic percent and approximately 5 atomic percent hafnium (Hf). In some embodiments, the alloy includes between approximately 3 atomic percent and approximately 5 atomic percent hafnium (Hf).

In some embodiments, the alloy includes at least approximately 1 atomic percent hafnium (Hf), at least approximately 2 atomic percent hafnium (Hf), at least approximately 3 atomic percent hafnium (Hf), or at least approximately 4 atomic percent hafnium (Hf). In some embodiments, the alloy includes at most approximately 2 atomic percent hafnium (Hf), at most approximately 3 atomic percent hafnium (Hf), at most approximately 4 atomic percent hafnium (Hf), or at most approximately 5 atomic percent hafnium (Hf).

In some embodiments, the alloy includes any suitable amount of niobium (Nb) that facilitates the alloy described herein. In many embodiments, the alloy includes a balance of niobium (Nb). In these embodiments, the amount of niobium (Nb) in the alloy is sufficient to bring the total atomic percent of the alloy to 100% of the atomic percentage.

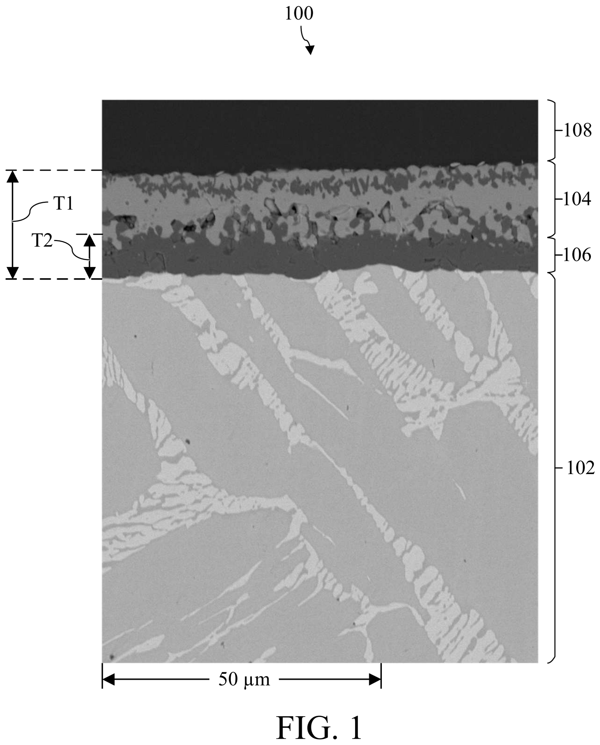

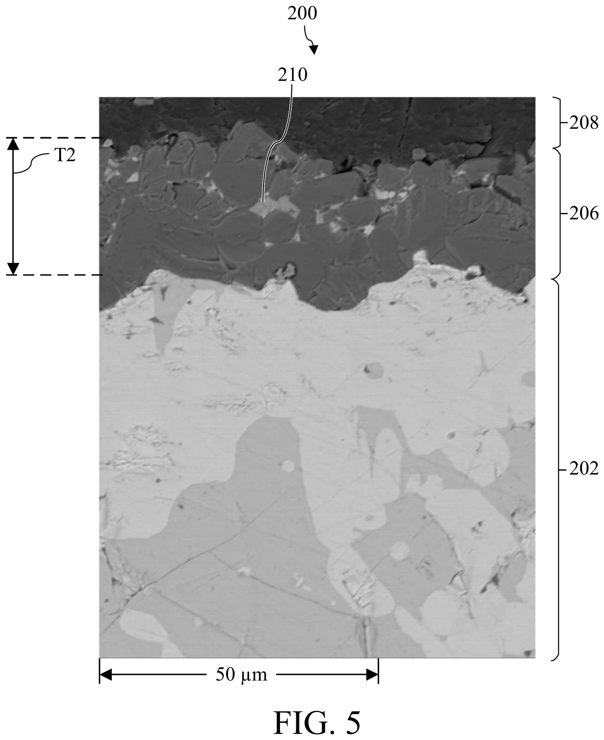

FIGS. 1-3 are scanning electron micrographs of the microstructure of a bulk ingot of one of the alloys of the disclosure. For example, the alloy 100 forming the bulk ingot shown in FIGS. 1-3 include a compositional make-up and/or atomic percentages as follows: approximately 28 atomic percent of titanium (Ti), approximately 47 atomic percent of aluminum (Al), approximately 2 atomic percent of molybdenum (Mo), and approximately 23 atomic percent of niobium (Nb). Although a single compositional example is shown and described herein with respect to alloy 100 of FIGS. 1-3, it is understood that alloy 100 can be formed from any of the various example alloy compositions discussed in detail above (see, FIGS. 5-9).

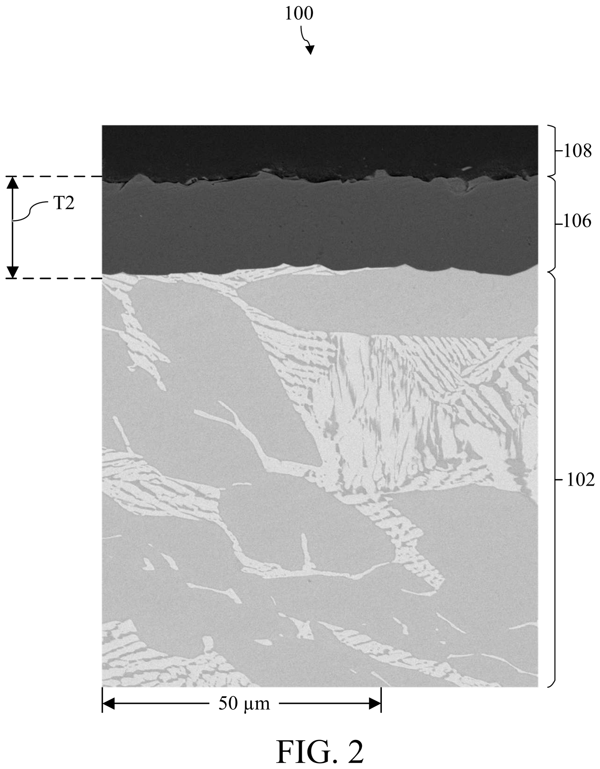

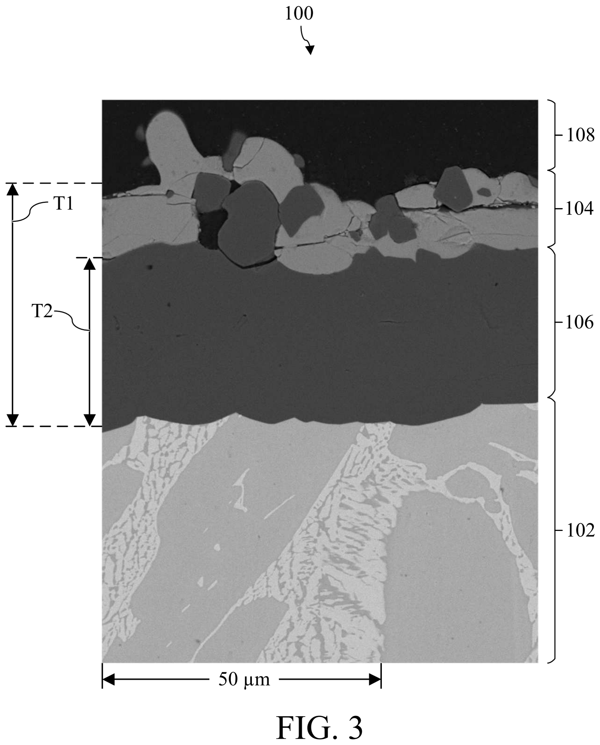

Additionally, FIGS. 1-3 show scanning electron micrographs of the microstructure of a bulk ingot of the alloy after the alloy is exposed to oxidation environment for 1 hour at 1400° C (FIG. 1), 24 hours at 1400° C (FIG. 2), and 100 hours at 1400° C (FIG. 3), respectively. Undergoing oxidation processes and/or exposing alloy 100 to the oxidation environment results in alloy 100 forming and/or including a plurality of phases or compositionally distinct portions 102, 104, 106 within the bulk ingot. The various portions identified in FIGS. 1-3 include a base portion 102, an oxide portion 104, and an aluminum oxide (Al2O3) or alumina portion 106. As shown in the non-limiting example of FIG. 1, initial exposure to the oxidation environment (e.g., 1 hour at 1400° C) results in alumina portion 106 being formed over base portion 102. Additionally, oxide portion 104 is formed over alumina portion 106 - opposite base portion 102. An epoxy 108 is disposed over oxide portion 104 and/or bonds bulk ingot of alloy 100 to a substrate to hold the bulk ingot in place during the oxidation and/or characterization processes, as discussed herein.

With respect to each portion 102, 104, 106, of alloy 100 being exposed to oxidation environments, the composition of some of the portions 104, 106 of alloy 100 is distinct, changed, and/or altered. For example, oxide portion 104 of the bulk ingot undergoes phase and/or compositional changes and includes discrete particles of mixed oxides of Nb, Ti, and/or Al. Distinct from oxide portion 104, alumina portion 106 is formed as aluminum oxide (Al2O3). Base portion 102 remains substantially unaltered (e.g., mixture of Ti, Al, Mo, &Nb). In the non-limiting example shown in FIG. 2, and after exposure of alloy 100 to 1400° C for 24 hours, at least some of oxide portion 104 formed within alloy may be removed, fall off, and/or dissipate from the bulk ingot (e.g., oxide portion 104 not shown in FIG. 2). However, with continued exposure to the oxidation environment, (see, FIG. 3 - 100 hours at 1400° C), additional and/or new oxide portion(s) 104 are formed within alloy 100 over alumina portion 106.

Moreover, and based on the time in which bulk ingot of alloy 100 is exposed to the oxidation environment, the depth and/or thickness in which portions 104, 106 are formed within alloy 100 increases and/or grows. An overall thickness of both oxide portion 104 and alumina portion 106 is identified as thickness (T1), while a thickness of just alumina portion 106 is identified as thickness (T2). In the non-limiting example shown in FIG. 1, the combined thickness (T1) of oxide portion 104 and alumina portion 106 is equal to about 19 microns (µm), while the thickness (T2) of alumina portion 106 is equal to about 6 µm. In the non-limiting example shown in FIG. 2, where oxide portion 104 is removed and/or dissipates from bulk ingot of alloy 100 during the oxidation process (e.g., 24 hours), the thickness (T2) of alumina portion 106 is about 17 µm. As shown in FIG. 3, and after 100 hours of exposure, the combined thickness (T1) of oxide portion 104 and alumina portion 106 is equal to about 43 microns (µm), while the thickness (T2) of alumina portion 106 is equal to about 30 µm.

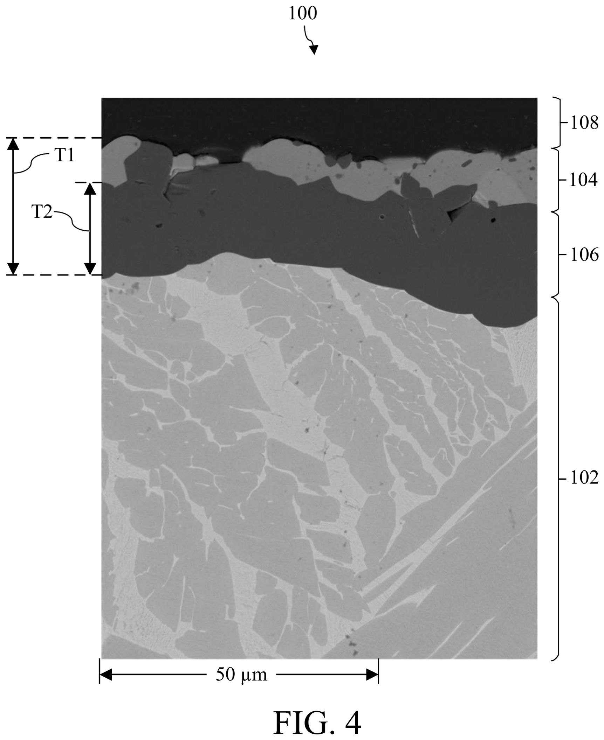

FIG. 4 shows scanning electron micrographs of the microstructure of the bulk ingot of alloy 100 undergoing a distinct oxidation process. More specifically, FIG. 4 shows alloy 100 after a cyclic oxidation process is performed thereon. In the cyclic oxidation process, bulk ingot of alloy 100 undergoes twenty five (25), one (1) hour cycles of raising temperatures up to 1400°C. Similar to the non-limiting examples discussed herein with respect to FIGS. 1-3, undergoing the cyclic oxidation process forms the plurality of phases or compositionally distinct portions 102, 104, 106 within the bulk ingot of alloy 100. That is, alumina portion 106 is formed over base portion 102, while oxide portion 104 is formed over alumina portion 106 - opposite base portion 102. Additionally, and as a result of undergoing the cyclic oxidation process, the compositionally distinct portions 104, 106 of alloy 100 include thicknesses (T1, T2). More specifically in the non-limiting example, the combined thickness (T1) of oxide portion 104 and alumina portion 106 is equal to about 26 µm, while the thickness (T2) of alumina portion 106 is equal to about 17 µm.

During the oxidation process, alumina portion 106 of alloy 100 is formed quickly (e.g., within 1 hour) and as a continuous layer. Furthermore, alumina portion 106, formed as aluminum oxide Al2O3, remains stable at 100 hours at 1400° C (FIG. 3) and does not include any cracks and/or material defects. With reduced stresses, a reduction in material defects is achieved. Additionally, the composition of alloy 100 allows for reduced and/or minimized peeling between the various portions 102, 104, 106 formed in alloy 100 during the oxidation process.

FIGS. 5-9 show scanning electron micrographs of a microstructure of a bulk ingot of non-limiting examples of alloys 200-600 after the alloys are exposed to oxidation environment for 24 hours at 1400° C. It is understood that similarly numbered and/or named components may function in a substantially similar fashion. Redundant explanation of these components has been omitted for clarity.

For example, the alloy 200 forming the bulk ingot shown in FIG. 5 includes a compositional make-up and/or atomic percentages as follows: approximately 22 atomic percent of titanium (Ti), approximately 42 atomic percent of aluminum (Al), approximately 2 atomic percent of molybdenum (Mo), approximately 15 atomic percent of silicon (Si), approximately 2 atomic percent of chromium (Cr), and approximately 17 atomic percent of niobium (Nb). Undergoing oxidation processes and/or exposing alloy 200 to the oxidation environment results in alloy 200 forming and/or including a plurality of phases or compositionally distinct portions 202, 206 within the bulk ingot. For example, and as shown in FIG. 5, alloy 200 includes base portion 202 and aluminum oxide (Al2O3) or alumina portion 206. Additionally as shown in the non-limiting example, mixed oxide or oxide patches 210 are formed within and/or dispersed throughout alumina portion 206. Alumina portion 206 is formed over base portion 202. Epoxy 208 is disposed over alumina portion 206 and/or bonds bulk ingot of alloy 200 to a substrate to hold the bulk ingot in place during the oxidation and/or characterization processes, as discussed herein.

With respect to each portion 202, 206, 210 of alloy 200 being exposed to oxidation environments, the composition of some of the portions 206, 210 of alloy 200 is distinct, changed, and/or altered. For example, oxide patches 210 of the bulk ingot undergoes phase and/or compositional changes and includes discrete particles of mixed oxides of Nb, Ti, and/or Al. Distinct from oxide patches 210, alumina portion 206 is formed as aluminum oxide (Al2O3). Base portion 202 remains substantially unaltered (e.g., mixture of Ti, Al, Mo, Si, Cr, & Nb).

In the non-limiting example shown in FIG. 5, where oxide patches 210 are disposed and/or formed within alumina portion 206 of alloy 200 during the oxidation process (e.g., 24 hours), the thickness (T2) of alumina portion 206 is about 25 µm.

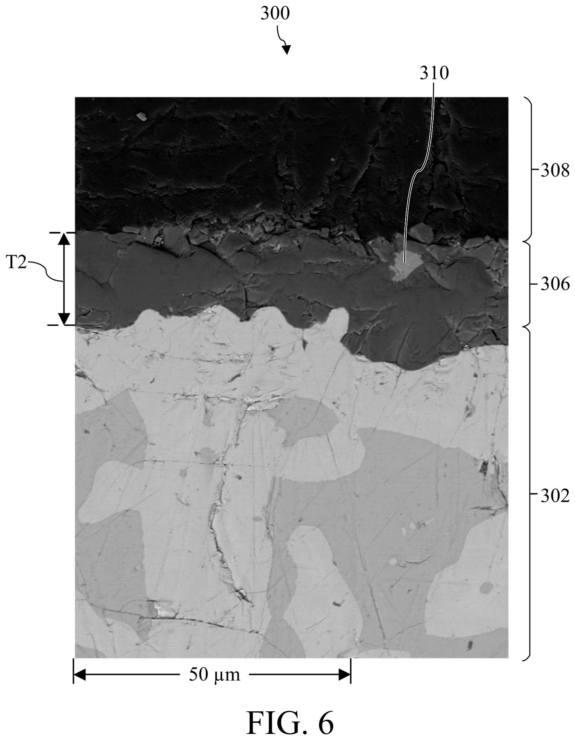

In the non-limiting example shown in FIG. 6, the alloy 300 forming the bulk ingot includes a compositional make-up and/or atomic percentages as follows: approximately 24 atomic percent of titanium (Ti), approximately 39 atomic percent of aluminum (Al), approximately 17 atomic percent of silicon (Si), approximately 2 atomic percent of chromium (Cr), and approximately 18 atomic percent of niobium (Nb). Undergoing oxidation processes and/or exposing alloy 300 to the oxidation environment results in alloy 300 forming and/or including a plurality of phases or compositionally distinct portions 302, 306, 310 within the bulk ingot. As shown in FIG. 6, alloy 300 includes base portion 302 and alumina portion 306. Additionally in the non-limiting example, mixed oxide or oxide patches 310 are formed within and/or dispersed throughout alumina portion 306. Alumina portion 306 is formed over base portion 302. Epoxy 308 is disposed over alumina portion 306 and/or bonds bulk ingot of alloy 300 to a substrate to hold the bulk ingot in place during the oxidation and/or characterization processes, as discussed herein.

With respect to each portion 302, 306, 310 of alloy 300 being exposed to oxidation environments, the composition of some of the portions 306, 310 of alloy 300 is distinct, changed, and/or altered. For example, oxide patches 310 of the bulk ingot undergoes phase and/or compositional changes and includes discrete particles of mixed oxides of Nb, Ti, and/or Al. Distinct from oxide patches 310, alumina portion 306 is formed as aluminum oxide (Al2O3). Base portion 302 remains substantially unaltered (e.g., mixture of Ti, Al, Si, Cr, & Nb).

Additionally, and as shown in FIG. 6, where oxide patches 310 are disposed and/or formed within alumina portion 306 of alloy 300 during the oxidation process (e.g., 24 hours), the thickness (T2) of alumina portion 306 is about 17 µm.

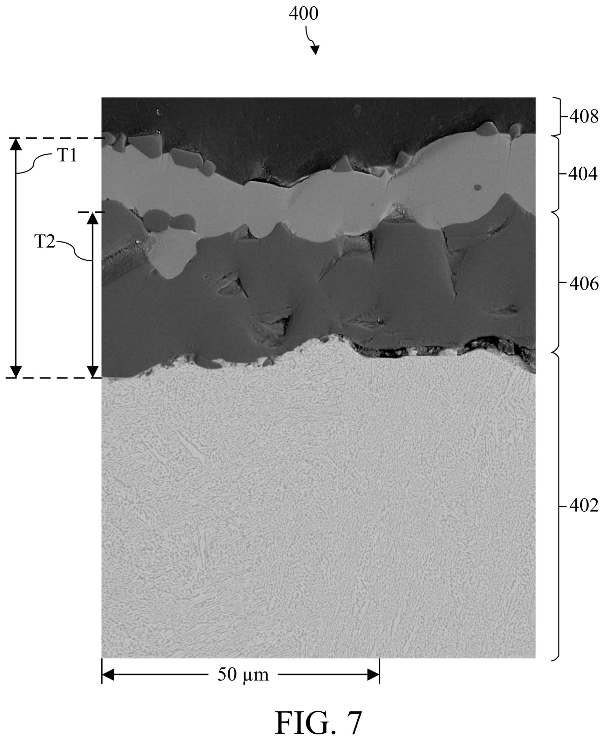

With respect to the non-limiting example shown in FIG. 7, the alloy 400 forming the bulk ingot includes a compositional make-up and/or atomic percentages as follows: approximately 27 atomic percent of titanium (Ti), approximately 44 atomic percent of aluminum (Al), approximately 10 atomic percent of molybdenum (Mo), and approximately 19 atomic percent of niobium (Nb). Undergoing oxidation processes and/or exposing alloy 400 to the oxidation environment results in alloy 400 forming and/or including a plurality of phases or compositionally distinct portions 402, 404, 406, within the bulk ingot. For example, and as shown in FIG. 7, alloy 400 includes base portion 402, oxide portion 404, and alumina portion 406. Alumina portion 406 is formed over base portion 402, and oxide portion 404 is formed over alumina portion 406 - opposite base portion 402. An epoxy 408 is disposed over oxide portion 404 and/or bonds bulk ingot of alloy 400 to a substrate to hold the bulk ingot in place during the oxidation and/or characterization processes, as discussed herein.

With respect to each portion 402, 404, 406 of alloy 400 being exposed to oxidation environments, the composition of some of the portions 404, 406 of alloy 400 is distinct, changed, and/or altered. For example, oxide portion 404 of the bulk ingot undergoes phase and/or compositional changes and includes discrete particles of mixed oxides of Nb, Ti, and/or Al. Distinct from oxide portions 404, alumina portion 406 is formed as aluminum oxide (Al2O3). Base portion 402 remains substantially unaltered (e.g., mixture of Ti, Al, Mo, & Nb).

In the non-limiting example shown in FIG. 7, the combined thickness (T1) of oxide portion 404 and alumina portion 406 is equal to about 35 µm, while the thickness (T2) of alumina portion 406 is equal to about 20 µm.

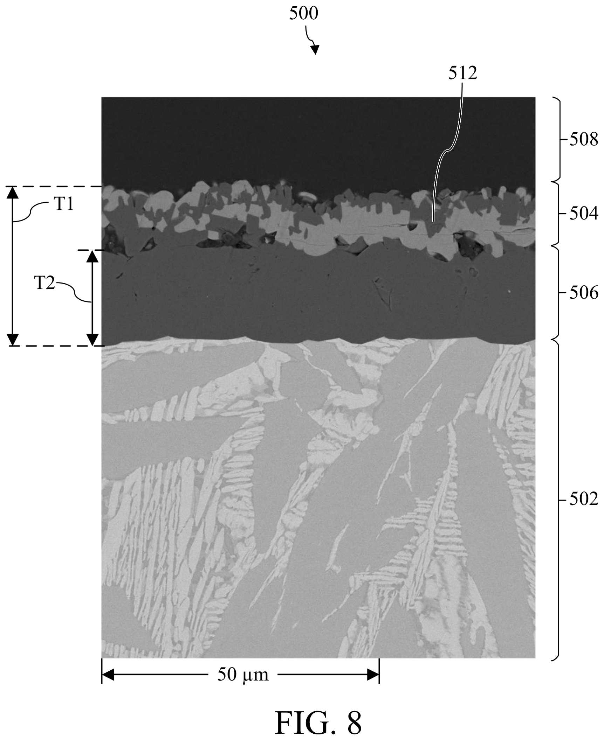

In the non-limiting example shown in FIG. 8, the alloy 500 forming the bulk ingot includes a compositional make-up and/or atomic percentages as follows: approximately 27 atomic percent of titanium (Ti), approximately 45 atomic percent of aluminum (Al), approximately 2 atomic percent of molybdenum (Mo), approximately 5 atomic percent of chromium (Cr), and approximately 21 atomic percent of niobium (Nb). Undergoing oxidation processes and/or exposing alloy 500 to the oxidation environment results in alloy 500 forming and/or including a plurality of phases or compositionally distinct portions 502, 504, 506, 512 within the bulk ingot. For example, and as shown in FIG. 8, alloy 500 includes base portion 502, oxide portion 504, alumina portion 506, and alumina patches 512. Alumina portion 506 is formed over base portion 502, and oxide portion 504 is formed over alumina portion 506 - opposite base portion 502. Alumina patches 512 are formed within and/or dispersed throughout oxide portion 504. An epoxy 508 is disposed over oxide portion 504 and/or bonds bulk ingot of alloy 500 to a substrate to hold the bulk ingot in place during the oxidation and/or characterization processes, as discussed herein.

With respect to each portion 502, 504, 506, 512 of alloy 500 being exposed to oxidation environments, the composition of some of the portions 504, 506, 512 of alloy 500 is distinct, changed, and/or altered. For example, oxide portion 504 of the bulk ingot undergoes phase and/or compositional changes and includes discrete particles of mixed oxides of Nb, Ti, and/or Al. Distinct from oxide portions 504, alumina portion 506 and alumina patches 512 are formed as aluminum oxide (Al2O3). Base portion 502 remains substantially unaltered (e.g., mixture of Ti, Al, Mo, Cr, & Nb).

Additionally as shown in the non-limiting example of FIG. 8, the combined thickness (T1) of oxide portion 504 and alumina portion 506 is equal to about 27 µm, while the thickness (T2) of alumina portion 506 is equal to about 16 µm.

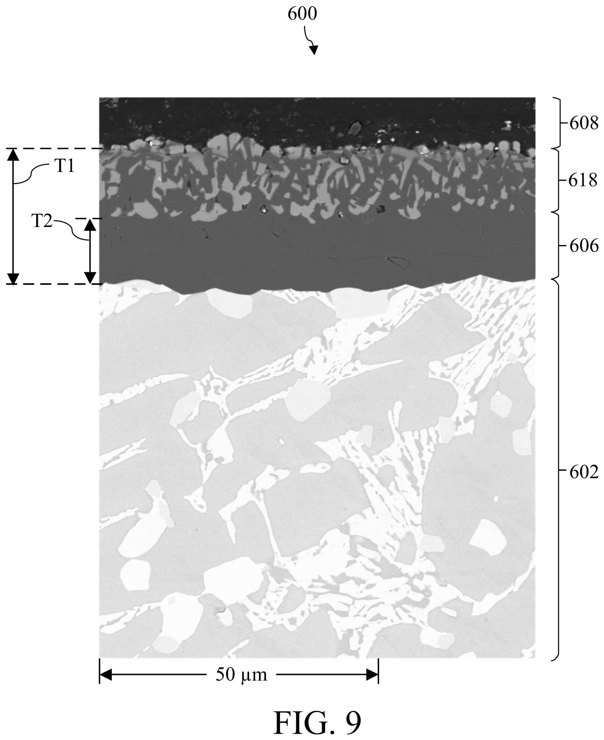

Alloy 600 forming the bulk ingot, as shown in FIG. 9, includes a compositional make-up and/or atomic percentages as follows: approximately 27 atomic percent of titanium (Ti), approximately 46 atomic percent of aluminum (Al), approximately 2 atomic percent of molybdenum (Mo), approximately 3 atomic percent of silicon (Si), and approximately 22 atomic percent of niobium (Nb). Undergoing oxidation processes and/or exposing alloy 600 to the oxidation environment results in alloy 600 forming and/or including a plurality of phases or compositionally distinct portions 602, 606, 618 within the bulk ingot. Ss shown in the non-limiting example of FIG. 9, alloy 600 includes base portion 602, alumina portion 606, and mixed portion 618. Alumina portion 606 is formed over base portion 602, and mixed portion 618 is formed over alumina portion 606 - opposite base portion 602. An epoxy 608 is disposed over mixed portion 618 and/or bonds bulk ingot of alloy 600 to a substrate to hold the bulk ingot in place during the oxidation and/or characterization processes, as discussed herein.

With respect to each portion 602, 606, 618 of alloy 600 being exposed to oxidation environments, the composition of some of the portions 606, 618 of alloy 600 is distinct, changed, and/or altered. For example, alumina portion 606 is formed as aluminum oxide (Al2O3). Mixed portion 618 is a combination and/or amalgamation of discrete particles of mixed oxides of Nb, Ti, and/or Al, as well as portions formed as aluminum oxide (Al2O3) - similar to alumina portion 606. Base portion 602 remains substantially unaltered (e.g., mixture of Ti, Al, Mo, Si, & Nb).

Additionally as shown in the non-limiting example of FIG. 8, the combined thickness (T1) of mixed portion 618 and alumina portion 606 is equal to about 26 µm, while the thickness (T2) of alumina portion 606 is equal to about 14 µm.

Furthermore, improved bonding and/or reduced peeling between distinct portions of a component assembly is achieved when alloy 100-600 is used or implemented as a bond coating. That is, the alloys (e.g., alloy 100-600) discussed herein can be used in forming a protective coating for applications that require high temperature (e.g., at about 1400° C or higher). For example, in non-limiting embodiments, alloy 100 (see, FIGS. 1-4) can be used as a bond coating disposed on and/or over a substrate exposed to high temperatures. In non-limiting examples, the substrate may be a substrate exposed to hostile environments of a gas turbine engine. That is, the substrate is formed from and/or includes refractory multi-principal element alloys (RMPEAs). In embodiments, the substrate is a RMPEA-based substrate used in turbines or turbine components including, but not limited to, blades, rotors, and/or nozzles. The gas turbine utilizing components formed from RMPEA substrates including a bond coating formed from alloy 100 include any suitable turbines including, but not limited to, land-based turbines, marine turbines, aeronautical turbines, and/or power generation turbines.

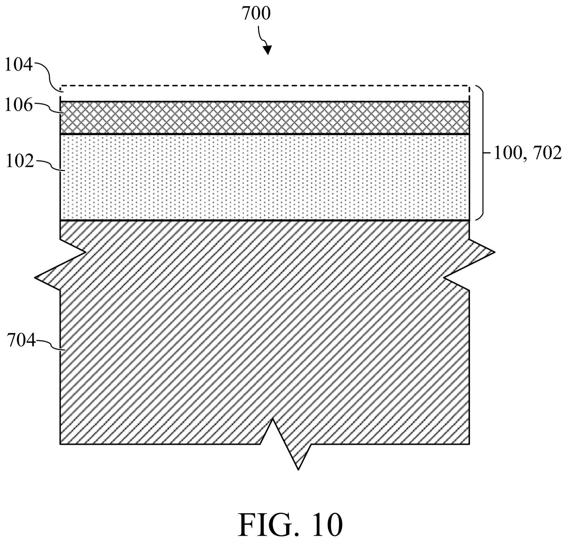

FIG. 10 is a schematic cross-sectional view of a component assembly 700 (hereafter, "component 700") with a bond coating 702 formed from alloy. In non-limiting examples, the alloy forming bond coating 702 may be substantially similar to any of the alloys 100-600 discussed herein with respect to FIGS. 1-9. For example, alloy 100 forming bond coating 702 within and/or on component 700 includes a compositional make-up and/or atomic percentages as follows: approximately 28 atomic percent of titanium (Ti), approximately 47 atomic percent of aluminum (Al), approximately 2 atomic percent of molybdenum (Mo), and approximately 23 atomic percent of niobium (Nb). Although a single compositional example for the alloy forming bond coating 702 is described herein with respect to FIG. 10, it is understood that the alloy forming bond coating 702 can be formed from any of the various example alloy compositions discussed in detail above.

Component 700 includes a substrate 704 having bond coating 702 disposed and/or deposited thereon/thereover. In non-limiting examples, substrate 704 is formed from a distinct material than alloy 100 forming bond coating 702. For example, substrate 704 is formed from refractory multi-principal element alloys (RMPEAs), where component 700 is subjected to high temperatures during use. In non-limiting examples, component 700 is formed as a hot gas path component including, but are not limited to, combustion liners, transition pieces, turbine nozzles, and turbine blades (also known as "turbine buckets"). As such, component 700 is exposed to high temperatures (e.g., approximately 1200° C to approximately 1400° C) within hot gas paths of turbines.

Bond coating 702 formed from alloy 100 is disposed and/or deposited directly over and/or directly on substrate 704 to form a protective coating and/or outer layer for component 700. As similarly discussed herein, and after coating and/or operation of component 700 within an intended system (e.g., turbine) bond coating 702/alloy 100 includes a base portion 102 and an outer portion formed as alumina portion 106. Outer portion or alumina portion 106 is formed within bond coating 702 and/or is formed directly over base portion 102, and opposite substrate 704 of component 700. Additionally, and shown in phantom as optional, bond coating 702 formed from alloy 100 also includes oxide portion 104 disposed and/or positioned over alumina portion 106 (see also, FIGS. 1 and 4).

At least one technical effect is to provide an alloy that can be used as a bond coating for components exposed to high temperatures. The alloy used for bond coating forms an outer alumina portion on the component, has reduced cracking and/or defects caused by exposure to stresses during oxidation processes/high temperature exposure, and reduces peeling between distinct portions of the alloy during oxidation processes/high temperature exposure, as well as improves bonding between the alloy and distinct substrates of the component.

The foregoing drawings show some of the processing associated according to several embodiments of this disclosure. In this regard, each drawing or block within a flow diagram of the drawings represents a process associated with embodiments of the method described. It should also be noted that in some alternative implementations, the acts noted in the drawings or blocks can occur out of the order noted in the figure or, for example, may in fact be executed substantially concurrently or in the reverse order, depending upon the act involved. Also, one of ordinary skill in the art will recognize that additional blocks that describe the processing can be added.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" and/or "substantially" as applied to a particular value of a range applies to both values, and unless otherwise dependent on the precision of the instrument measuring the value, may indicate +/- 10% of the stated value(s).

Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

Moreover, references to "some embodiments" in the description herein are not intended to be interpreted as excluding the existence of additional embodiments that also incorporate the recited features.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Exemplary alloys and bond coatings included herein are capable of forming alumina-portions within the alloy and/or bond coating to increase oxidation resistance for components or substrates bond coated with the alloy. This in turn improves the capabilities of components bond coated with the alloys discussed herein, and/or allows for component to be formed from material typically not used due to low oxidation resistance (e.g., refractory multi-principal element alloys (RMPEAs)). Additionally, exemplary alloys and bond coatings included herein reduce defects (e.g., cracks and breaks) formed in the bond coating after undergoing oxidation processes and/or exposure to high-temperature, thus improving uniformity and density within the bond coatings. Moreover, exemplary alloys and bond coatings included herein improve bonds between the bond coating and components or substrates formed from unique material (e.g., RMPEAs), and reduce peeling between distinct portions of the bond coating after undergoing oxidation processes and/or exposure to high-temperature. Furthermore, exemplary alloys and bond coatings as discussed herein reduce stresses imparted on the alloys and bond coatings undergoing oxidation processes and/or exposure to high-temperature. Reducing the stresses imparted on the alloy and bond coating formed thereof can increase the operational life and/or strength of the bond coating.

The above description is meant to be exemplary only, and one skilled in the art will recognize that changes may be made to the embodiments described without departing from the scope of the invention disclosed. Modifications, which fall within the scope of the present invention, will be apparent to those skilled in the art, in light of a review of this disclosure, and such modifications are intended to fall within the appended claims. The systems described herein are not limited to the specific embodiments described herein, but rather portions of the various systems may be utilized independently and separately from other systems described herein.

Although specific features of various embodiments of the invention may be shown in some drawings and not in others, this is for convenience only. Moreover, references to "one embodiment" in the above description are not intended to be interpreted as excluding the existence of additional embodiments that also incorporate the recited features. In accordance with the principles of the invention, any feature of a drawing may be referenced and/or claimed in combination with any feature of any other drawing.

Further aspects of the invention are provided by the subject matter of the following clauses: an alloy, comprising: between approximately 20 atomic percent and approximately 30 atomic percent titanium (Ti); between approximately 35 atomic percent and approximately 55 atomic percent aluminum (Al); and a balance of niobium (Nb).

The alloy in accordance with the preceding clause, further comprising at least one of: between approximately 1 atomic percent and approximately 10 atomic percent molybdenum (Mo); between approximately 1 atomic percent and approximately 7 atomic percent chromium (Cr); between approximately 1 atomic percent and approximately 20 atomic percent silicon (Si); or between approximately 1 atomic percent and approximately 5 atomic percent hafnium (Hf).

The alloy in accordance with any of the preceding clauses, comprising: between approximately 25 atomic percent and approximately 30 atomic percent of the titanium (Ti); between approximately 35 atomic percent and approximately 55 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); or between approximately 1 atomic percent and approximately 10 atomic percent of the silicon (Si); and the balance of niobium (Nb).

The alloy in accordance with any of the preceding clauses, comprising: between approximately 25 atomic percent and approximately 30 atomic percent of the titanium (Ti); between approximately 40 atomic percent and approximately 50 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); or between approximately 1 atomic percent and approximately 7 atomic percent of the silicon (Si); and the balance of niobium (Nb).

The alloy in accordance with any of the preceding clauses, comprising: between approximately 25 atomic percent and approximately 30 atomic percent of the titanium (Ti); between approximately 40 atomic percent and approximately 50 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); between approximately 1 atomic percent and approximately 7 atomic percent of the silicon (Si); or between approximately 1 atomic percent and approximately 5 atomic percent of the hafnium (Hf); and the balance of niobium (Nb).

The alloy in accordance with any of the preceding clauses, comprising: between approximately 20 atomic percent and approximately 26 atomic percent of the titanium (Ti); between approximately 35 atomic percent and approximately 46 atomic percent of the aluminum (Al); at least one of: between approximately 1 atomic percent and approximately 5 atomic percent of the molybdenum (Mo); between approximately 1 atomic percent and approximately 5 atomic percent of the chromium (Cr); or between approximately 10 atomic percent and approximately 20 atomic percent of the silicon (Si); and the balance of niobium (Nb).

The alloy in accordance with any of the preceding clauses, comprising: between approximately 21 atomic percent and approximately 25 atomic percent of the titanium (Ti); between approximately 36 atomic percent and approximately 44 atomic percent of the aluminum (Al); at least one of: between approximately 1 atomic percent and approximately 4 atomic percent of the molybdenum (Mo); between approximately 1 atomic percent and approximately 3 atomic percent of the chromium (Cr); or between approximately 13 atomic percent and approximately 19 atomic percent of the silicon (Si); and the balance of niobium (Nb).

A bond coating composition, comprising: an alloy including: between approximately 20 atomic percent and approximately 30 atomic percent titanium (Ti); between approximately 35 atomic percent and approximately 55 atomic percent aluminum (Al); at least one of: between approximately 1 atomic percent and approximately 10 atomic percent molybdenum (Mo); between approximately 1 atomic percent and approximately 7 atomic percent chromium (Cr); between approximately 1 atomic percent and approximately 20 atomic percent silicon (Si); or between approximately 1 atomic percent and approximately 5 atomic percent hafnium (Hf); and a balance of niobium (Nb).

The bond coating composition in accordance with the preceding clause, wherein the alloy further includes: between approximately 25 atomic percent and approximately 30 atomic percent of the titanium (Ti); between approximately 35 atomic percent and approximately 55 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); or between approximately 1 atomic percent and approximately 10 atomic percent of the silicon (Si); and the balance of niobium (Nb).

The bond coating composition in accordance with any of the preceding clauses, wherein the alloy further includes: between approximately 25 atomic percent and approximately 30 atomic percent of the titanium (Ti); between approximately 40 atomic percent and approximately 50 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); or between approximately 1 atomic percent and approximately 7 atomic percent of the silicon (Si); and the balance of niobium (Nb).

The bond coating composition in accordance with any of the preceding clauses, wherein the alloy further includes: between approximately 25 atomic percent and approximately 30 atomic percent of the titanium (Ti); between approximately 40 atomic percent and approximately 50 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); between approximately 1 atomic percent and approximately 7 atomic percent of the silicon (Si); or between approximately 1 atomic percent and approximately 5 atomic percent of the hafnium (Hf); and the balance of niobium (Nb).

The bond coating composition in accordance with any of the preceding clauses, wherein the alloy further includes: between approximately 20 atomic percent and approximately 26 atomic percent of the titanium (Ti); between approximately 35 atomic percent and approximately 46 atomic percent of the aluminum (Al); at least one of: between approximately 1 atomic percent and approximately 5 atomic percent of the molybdenum (Mo); between approximately 1 atomic percent and approximately 5 atomic percent of the chromium (Cr); or between approximately 10 atomic percent and approximately 20 atomic percent of the silicon (Si); and the balance of niobium (Nb).

The bond coating composition in accordance with any of the preceding clauses, wherein the alloy further includes: between approximately 21 atomic percent and approximately 25 atomic percent of the titanium (Ti); between approximately 36 atomic percent and approximately 44 atomic percent of the aluminum (Al); at least one of: between approximately 1 atomic percent and approximately 4 atomic percent of the molybdenum (Mo); between approximately 1 atomic percent and approximately 3 atomic percent of the chromium (Cr); or between approximately 13 atomic percent and approximately 19 atomic percent of the silicon (Si); and the balance of niobium (Nb).

A component comprising: a substrate formed from a first material; and a bond coating disposed over the substrate, the bond coating formed from an alloy including: between approximately 20 atomic percent and approximately 30 atomic percent titanium (Ti); between approximately 35 atomic percent and approximately 55 atomic percent aluminum (Al); at least one of: between approximately 1 atomic percent and approximately 10 atomic percent molybdenum (Mo); between approximately 1 atomic percent and approximately 7 atomic percent chromium (Cr); between approximately 1 atomic percent and approximately 20 atomic percent silicon (Si); or between approximately 1 atomic percent and approximately 5 atomic percent hafnium (Hf); and a balance of niobium (Nb), wherein the bond coating includes an outer portion formed as aluminum oxide (Al₂O₃).

The component in accordance with the preceding clause, wherein the alloy forming the bond coating further includes: between approximately 25 atomic percent and approximately 30 atomic percent of the titanium (Ti); between approximately 35 atomic percent and approximately 55 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); or between approximately 1 atomic percent and approximately 10 atomic percent of the silicon (Si); and the balance of niobium (Nb)

The component in accordance with any of the preceding clause, wherein the alloy forming the bond coating further includes: between approximately 25 atomic percent and approximately 30 atomic percent of the titanium (Ti); between approximately 40 atomic percent and approximately 50 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); or between approximately 1 atomic percent and approximately 7 atomic percent of the silicon (Si); and the balance of niobium (Nb).

The component in accordance with any of the preceding clause, wherein the alloy forming the bond coating further includes: between approximately 25 atomic percent and approximately 30 atomic percent of the titanium (Ti); between approximately 40 atomic percent and approximately 50 atomic percent of the aluminum (Al); at least one of: between approximately 1 atomic percent and approximately 10 atomic percent of the molybdenum (Mo); between approximately 1 atomic percent and approximately 7 atomic percent of the chromium (Cr); between approximately 1 atomic percent and approximately 7 atomic percent of the silicon (Si); or between approximately 1 atomic percent and approximately 5 atomic percent of the hafnium (Hf); and the balance of niobium (Nb).

The component in accordance with any of the preceding clause, wherein the alloy forming the bond coating further includes: between approximately 20 atomic percent and approximately 26 atomic percent of the titanium (Ti); between approximately 35 atomic percent and approximately 46 atomic percent of the aluminum (Al); at least one of: between approximately 1 atomic percent and approximately 5 atomic percent of the molybdenum (Mo); between approximately 1 atomic percent and approximately 5 atomic percent of the chromium (Cr); or between approximately 10 atomic percent and approximately 20 atomic percent of the silicon (Si); and the balance of niobium (Nb).

The component in accordance with any of the preceding clause, wherein the alloy forming the bond coating further includes: between approximately 21 atomic percent and approximately 25 atomic percent of the titanium (Ti); between approximately 36 atomic percent and approximately 44 atomic percent of the aluminum (Al); at least one of: between approximately 1 atomic percent and approximately 4 atomic percent of the molybdenum (Mo); between approximately 1 atomic percent and approximately 3 atomic percent of the chromium (Cr); or between approximately 13 atomic percent and approximately 19 atomic percent of the silicon (Si); and the balance of niobium (Nb).

The component in accordance with any of the preceding clause, wherein the first material forming the substrate includes refractory multi-principal element alloys (RMPEAs).

## Claims

1. An alloy, comprising:
between approximately 20 atomic percent and approximately 30 atomic percent titanium (Ti);
between approximately 35 atomic percent and approximately 55 atomic percent aluminum (Al); and
a balance of niobium (Nb).

2. The alloy of claim 1, further comprising at least one of:
between approximately 1 atomic percent and approximately 10 atomic percent molybdenum (Mo);
between approximately 1 atomic percent and approximately 7 atomic percent chromium (Cr);
between approximately 1 atomic percent and approximately 20 atomic percent silicon (Si); or
between approximately 1 atomic percent and approximately 5 atomic percent hafnium (Hf).

3. The alloy of claim 2, comprising:
between approximately 25 atomic percent and approximately 30 atomic percent of the titanium (Ti);
between approximately 35 atomic percent and approximately 55 atomic percent of the aluminum (Al);
at least one of:
between approximately 1 atomic percent and approximately 10 atomic percent of the molybdenum (Mo);
between approximately 1 atomic percent and approximately 7 atomic percent of the chromium (Cr); or
between approximately 1 atomic percent and approximately 10 atomic percent of the silicon (Si); and
the balance of niobium (Nb).

4. The alloy of claim 2, comprising:
between approximately 25 atomic percent and approximately 30 atomic percent of the titanium (Ti);
between approximately 40 atomic percent and approximately 50 atomic percent of the aluminum (Al);
at least one of:
between approximately 1 atomic percent and approximately 10 atomic percent of the molybdenum (Mo);
between approximately 1 atomic percent and approximately 7 atomic percent of the chromium (Cr); or
between approximately 1 atomic percent and approximately 7 atomic percent of the silicon (Si); and
the balance of niobium (Nb).

5. The alloy of claim 2, comprising:
between approximately 25 atomic percent and approximately 30 atomic percent of the titanium (Ti);
between approximately 40 atomic percent and approximately 50 atomic percent of the aluminum (Al);
at least one of:
between approximately 1 atomic percent and approximately 10 atomic percent of the molybdenum (Mo);
between approximately 1 atomic percent and approximately 7 atomic percent of the chromium (Cr);
between approximately 1 atomic percent and approximately 7 atomic percent of the silicon (Si); or
between approximately 1 atomic percent and approximately 5 atomic percent of the hafnium (Hf); and
the balance of niobium (Nb).

6. The alloy of claim 2, comprising:
between approximately 20 atomic percent and approximately 26 atomic percent of the titanium (Ti);
between approximately 35 atomic percent and approximately 46 atomic percent of the aluminum (Al);
at least one of:
between approximately 1 atomic percent and approximately 5 atomic percent of the molybdenum (Mo);
between approximately 1 atomic percent and approximately 5 atomic percent of the chromium (Cr); or
between approximately 10 atomic percent and approximately 20 atomic percent of the silicon (Si); and
the balance of niobium (Nb).

7. The alloy of claim 2, comprising:
between approximately 21 atomic percent and approximately 25 atomic percent of the titanium (Ti);
between approximately 36 atomic percent and approximately 44 atomic percent of the aluminum (Al);
at least one of:
between approximately 1 atomic percent and approximately 4 atomic percent of the molybdenum (Mo);
between approximately 1 atomic percent and approximately 3 atomic percent of the chromium (Cr); or
between approximately 13 atomic percent and approximately 19 atomic percent of the silicon (Si); and
the balance of niobium (Nb).

8. A bond coating composition comprising:
an alloy including:
between approximately 20 atomic percent and approximately 30 atomic percent titanium (Ti);
between approximately 35 atomic percent and approximately 55 atomic percent aluminum (Al);
at least one of:
between approximately 1 atomic percent and approximately 10 atomic percent molybdenum (Mo);
between approximately 1 atomic percent and approximately 7 atomic percent chromium (Cr);
between approximately 1 atomic percent and approximately 20 atomic percent silicon (Si); or
between approximately 1 atomic percent and approximately 5 atomic percent hafnium (Hf); and
a balance of niobium (Nb).

9. The bond coating composition of claim 8, wherein the alloy further includes:
between approximately 25 atomic percent and approximately 30 atomic percent of the titanium (Ti);
between approximately 35 atomic percent and approximately 55 atomic percent of the aluminum (Al);
at least one of:
between approximately 1 atomic percent and approximately 10 atomic percent of the molybdenum (Mo);
between approximately 1 atomic percent and approximately 7 atomic percent of the chromium (Cr); or
between approximately 1 atomic percent and approximately 10 atomic percent of the silicon (Si); and
the balance of niobium (Nb).

10. The bond coating composition of claim 8, wherein the alloy further includes:
between approximately 25 atomic percent and approximately 30 atomic percent of the titanium (Ti);
between approximately 40 atomic percent and approximately 50 atomic percent of the aluminum (Al);
at least one of:
between approximately 1 atomic percent and approximately 10 atomic percent of the molybdenum (Mo);
between approximately 1 atomic percent and approximately 7 atomic percent of the chromium (Cr); or
between approximately 1 atomic percent and approximately 7 atomic percent of the silicon (Si); and
the balance of niobium (Nb).

11. The bond coating composition of claim 8, wherein the alloy further includes:
between approximately 25 atomic percent and approximately 30 atomic percent of the titanium (Ti);
between approximately 40 atomic percent and approximately 50 atomic percent of the aluminum (Al);
at least one of:
between approximately 1 atomic percent and approximately 10 atomic percent of the molybdenum (Mo);
between approximately 1 atomic percent and approximately 7 atomic percent of the chromium (Cr);
between approximately 1 atomic percent and approximately 7 atomic percent of the silicon (Si); or
between approximately 1 atomic percent and approximately 5 atomic percent of the hafnium (Hf); and
the balance of niobium (Nb).

12. The bond coating composition of claim 8, wherein the alloy further includes:
between approximately 20 atomic percent and approximately 26 atomic percent of the titanium (Ti);
between approximately 35 atomic percent and approximately 46 atomic percent of the aluminum (Al);
at least one of:
between approximately 1 atomic percent and approximately 5 atomic percent of the molybdenum (Mo);
between approximately 1 atomic percent and approximately 5 atomic percent of the chromium (Cr); or
between approximately 10 atomic percent and approximately 20 atomic percent of the silicon (Si); and
the balance of niobium (Nb).

13. The bond coating composition of claim 8, wherein the alloy further includes:
between approximately 21 atomic percent and approximately 25 atomic percent of the titanium (Ti);
between approximately 36 atomic percent and approximately 44 atomic percent of the aluminum (Al);
at least one of:
between approximately 1 atomic percent and approximately 4 atomic percent of the molybdenum (Mo);
between approximately 1 atomic percent and approximately 3 atomic percent of the chromium (Cr); or
between approximately 13 atomic percent and approximately 19 atomic percent of the silicon (Si); and
the balance of niobium (Nb).

14. A component comprising:
a substrate formed from a first material; and
a bond coating deposited over the substrate, the bond coating formed from an alloy including:
between approximately 20 atomic percent and approximately 30 atomic percent titanium (Ti);
between approximately 35 atomic percent and approximately 55 atomic percent aluminum (Al);
at least one of:
between approximately 1 atomic percent and approximately 10 atomic percent molybdenum (Mo);
between approximately 1 atomic percent and approximately 7 atomic percent chromium (Cr);
between approximately 1 atomic percent and approximately 20 atomic percent silicon (Si); or
between approximately 1 atomic percent and approximately 5 atomic percent hafnium (Hf); and
a balance of niobium (Nb),
wherein the bond coating includes an outer portion formed as aluminum oxide (Al₂O₃).

15. The component of claim 14, wherein the alloy forming the bond coating further includes:
between approximately 25 atomic percent and approximately 30 atomic percent of the titanium (Ti);
between approximately 35 atomic percent and approximately 55 atomic percent of the aluminum (Al);
at least one of:
between approximately 1 atomic percent and approximately 10 atomic percent of the molybdenum (Mo);
between approximately 1 atomic percent and approximately 7 atomic percent of the chromium (Cr); or
between approximately 1 atomic percent and approximately 10 atomic percent of the silicon (Si); and
the balance of niobium (Nb).
